# EUROPÄISCHE PATENTSCHRIFT

(11) **EP 2 184 441 B1**
(45) Veröffentlichungstag und Bekanntmachung des Hinweises auf die Patenterteilung: **04.01.2017**
(21) Anmeldenummer: 09174868.1
(22) Anmeldetag: 03.11.2009
(51) Int. Cl.: F01D 5/02, F16C 3/02, F01D 5/28

(54) **Triebwerkswelle für ein Gasturbinentriebwerk**
Shaft of a gas turbine
Arbre de turbine à gaz

(30) Priorität: 05.11.2008 DE 102008056018
(43) Veröffentlichungstag der Anmeldung: 12.05.2010
(73) Patentinhaber: Rolls-Royce Deutschland Ltd & Co KG, 15827 Blankenfelde-Mahlow (DE)
(72) Erfinder: Schreiber, Karl, 15838, Am Mellensee (DE); Grothaus, Raimund, 01239 Dresden (DE)

(56) Entgegenhaltungen:
- EP-A1- 0 019 585
- GB-A- 2 424 464
- US-A- 3 532 438
- US-A- 5 318 374
- US-A- 5 601 493

## Beschreibung

Die Erfindung betrifft eine Triebwerkswelle, insbesondere die Niederdruckturbinenwelle oder die Radialwelle für ein Gasturbinentriebwerk, die als Hohlkörper ausgebildet ist und antriebsseitig ein Lasteinleitungsteil und abtriebsseitig ein Lastableitungsteil aufweist.

Ein bekanntes Mehrwellen-Mantelstromgasturbinentriebwerk weist in Strömungsrichtung hintereinander beispielsweise einen Lufteinlass, einen Fan, einen Zwischendruckkompressor und einen Hochdruckkompressor, eine Brennkammer, eine Hochdruckturbine, eine Zwischendruckturbine und eine Niederdruckturbine auf. Die Hochdruckturbine, die Zwischendruckturbine und die Niederdruckturbine sind über konzentrisch angeordnete Antriebswellen, das heißt eine Hochdruckturbinenwelle, eine Zwischendruckturbinenwelle und eine Niederdruckturbinenwelle, mit dem Hochdruckkompressor, dem Zwischendruckkompressor und dem Fan verbunden. Der Fan erzeugt einen ersten Luftstrom oder Mantelstrom, der den Vortriebsschub liefert, und einen zweiten Luftstrom, der zunächst im Zwischendruckkompressor verdichtet wird und danach in Hochdruckkompressor weiter verdichtet wird. Mit den aus der Brennkammer austretenden expandierenden Gasen werden die Hochdruckturbine, die Zwischendruckturbine und die Niederdruckturbine betrieben, wobei die aus dem Triebwerk über eine Düse ausgestoßenen Gase für einen zusätzlichen Antriebsschub sorgen.

Die konzentrisch zur hohl ausgebildeten Zwischendruckturbinenwelle - oder bei einem Zweiwellen-Gasturbinentriebwerk zur Hochdruckturbinenwelle - angeordnete Niederdruckturbinenwelle (Niederdruckwelle), die zur Verbindung mit dem Fan und der Niederdruckturbine an ihren Enden zur Übertragung der hohen Kräfte starr befestigte Kopplungselemente (Lasteinleitungsteil, Lastableitungsteil) aufweist, hat gegenüber den beiden anderen Wellen den geringsten Durchmesser, die größte Länge und die geringste Drehzahl und muss zudem die höchste Belastung aufnehmen. Sie stellt daher innerhalb des Triebwerks ein hoch belastetes kritisches Bauteil dar, das keinesfalls versagen darf, aber andererseits einen möglichst geringen Außendurchmesser haben soll, um Turbinenscheiben mit möglichst geringem Innendurchmesser verwenden zu können und somit leichte und leistungsfähige Turbinen bereitstellen zu können. Die üblicherweise aus Stahl oder einem Nickelbasiswerkstoff bestehende, geschmiedete und hohl gebohrte Niederdruckwelle ist kostenaufwendig in der Herstellung und weist zudem ein hohes Gewicht auf. Um im Zuge der ständigen Weiterentwicklung der Flugzeugtriebwerke bei begrenztem, möglichst kleinem Wellendurchmesser dennoch größere Drehmomente mit der Niederdruckturbinenwelle übertragen sowie größere Wellenlängen und höhere Drehzahlen erreichen zu können und eine hohe Steifigkeit der Niederdruckturbinenwelle zu erzielen, besteht nur die Möglichkeit einer Wandstärkenvergrößerung nach innen. Damit ist jedoch eine Senkung der Eigenfrequenz der Niederdruckwelle und deren Annäherung an die Eigenfrequenz des Triebwerks verbunden, so dass nicht nur das Gewicht der Niederdruckwelle erhöht wird, sondern auch eine Schwingungserhöhung möglich ist und mithin die Gefahr der Beschädigung oder Zerstörung der Niederdruckturbinenwelle besteht.

Ähnliche Anforderungen wie an die Niederdruckturbinenwelle werden auch an die ein äußeres und ein inneres Getriebe verbindende Radialwelle gestellt, die jedoch an beiden Wellenenden, aber immer in der gleichen Richtung, angetrieben wird, so dass unterschiedliche Drehmomente auf die Radialwelle wirken. Wie die Niederdruckwelle muss auch die Radialwelle möglichst schlank ausgebildet sein.

Die EP 0 019 585 A1 beschreibt eine Kraftübertragungswelle gemäß dem Oberbegriff des Patentanspruchs 1.

Der Erfindung liegt die Aufgabe zugrunde, die Niederdruckturbinenwelle oder die Radialwelle für ein Gasturbinentriebwerk so auszubilden, dass bei begrenztem Außendurchmesser hohe Drehmomente betriebssicher übertragen werden können und die Welle dabei mit hoher Steifigkeit und Eigenfrequenz ausgebildet ist.

Erfindungsgemäß wird die Aufgabe mit einer gemäß den Merkmalen des Patentanspruchs 1 ausgebildeten Triebwerkswelle gelöst. Vorteilhafte Weiterbildungen der Erfindung ergeben sich aus den Unteransprüchen.

Der Kern der Erfindung liegt in der Ausbildung der betreffenden Triebwerkswelle als aus unterschiedlichen Faserlagen bestehendes Faserverbundkunststoffrohr mit einem zur Lasteinleitung - vorzugsweise bei der Niederdruckturbinenwelle - integral aus Faserverbundkunststoff über einen erweiterten Rohrabschnitt angeformten Befestigungsflansch oder einem unlösbar in den Faserverbund eingebundenen metallischen Antriebszapfen sowie mit einem am anderen Wellenende zur Lastableitung unlösbar in den Faserverbund eingebundenen metallischen Abtriebszapfen. Ein wesentlicher Erfindungsgedanke besteht zudem in der speziellen Faserorientierung in den mehreren Faserlagen, und zwar derart, dass die von der Innenwand des Faserverbundkunststoffrohres ausgehenden Faserlagen in einem zur Aufnahme und Übertragung von Torsionskräften geeigneten Winkel und die im äußeren Wandbereich vorgesehenen Faserlagen in einem die Steifigkeit des Faserverbundrohres bewirkenden Winkel angeordnet sind. Während die äußeren Faserlagen mit einem Winkel zwischen +/-12° und +/-5° weitestgehend in Richtung der Wellenachse verlaufen, sind die zur Innenwand hin anschließenden Faserlagen mit einem Winkel zwischen +/-45° und +/-35°deutlich stärker quer zur Längsachse orientiert. Über die Ausrichtung der Fasern in dem jeweiligen Radiusbereich kann die Niederdruckturbinenwelle in Bezug auf Steifigkeit, Eigenfrequenz und Dämpfung sowie hinsichtlich der zu übertragenden Torsionskräfte variabel ausgebildet und an die jeweilige Triebwerksleistung angepasst werden. Die integrale Einbindung des metallischen Abtriebs- und Antriebszapfens in die die Torsionskräfte übertragenden innen liegenden Faserlagen sorgt für eine sichere Lastableitung. Die Herstellungskosten und das Gewicht der Niederdruckturbinenwelle bzw. der Radialwelle sind im Vergleich zu metallischen Ausführungsformen gering. Entsprechend der Belastung der Niederdruckturbinenwelle wird in Abhängigkeit von der Orientierung der Faserlagen ein hinsichtlich der Übertragbarkeit von Torsionskräften und der Steifigkeit entkoppeltes Eigenschaftsprofil der Niederdruckturbinenwelle erzeugt. Um den auf die Radialwelle wirkenden unterschiedlichen Drehmomenten Rechnung zu tragen, sind die +/-45°-Fasern und die +/-35°-Fasernzur Ausbildung eines Fasergeflechts gleichzeitig verlegt.

Gemäß einer bevorzugten Ausführungsform umfasst das Faserverbundkunststoffrohr eine erste - innere - Kohlenstofffaserlage und eine daran anschließende zweite Kohlenstofffaserlage, die jeweils im Winkel von +45° und45° angeordnet sind, eine dritte und eine vierte Kohlenstofffaserlage, die jeweils im Winkel von +35° und -35° angeordnet sind, und außen liegende fünfte und sechste Kohlenstofffaserlagen, die jeweils im Winkel von +5° bzw. -5° angeordnet sind.

In Ausgestaltung der Erfindung ist an der Außenfläche des Faserverbundkunststoffrohres ein schlauchartiges Geflecht aus im Winkel von +45° und -45° orientierten Fasern vorgesehen. Vorzugsweise besteht die zum mechanischen Oberflächenschutz vorgesehene äußerste Faserlage aus Glasfasern.

Gemäß einem weiteren Merkmal der Erfindung sind die Faserlagen in eine entsprechend der Temperatur der Triebwerkswelle im Betrieb hochtemperaturbeständige Kunststoffmatrix eingebettet, die vorzugsweise aus Zyanatund/oder Phenolharzen und/oder Polyimiden und/oder Polyetheretherketonen besteht.

Ein Ausführungsbeispiel der Erfindung wird anhand der Zeichnung näher erläutert. Es zeigen:
- Fig. 1: einen Halbschnitt eines Dreiwellen-Gasturbinentriebwerks in stark vereinfachter Darstellung;
- Fig. 2: eine Schnittansicht einer als Hybrid ausgebildeten Niederdruckturbinenwelle;
- Fig. 3: eine detaillierte Darstellung der Wand der in Fig. 2 gezeigten Niederdruckturbinenwelle; und
- Fig. 4: eine graphische Darstellung der Spannungsverteilung über die Wandstärke bzw. den Radius der Niederdruckturbinenwelle.

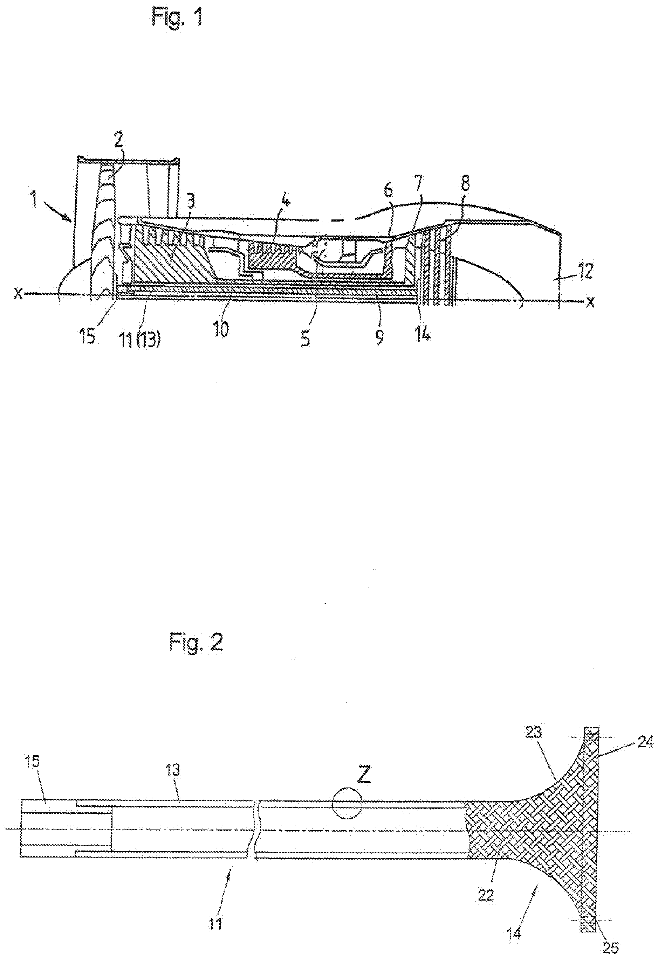

Das in Fig. 1 gezeigte Gasturbinentriebwerk weist in Strömungsrichtung hintereinander einen Lufteinlass 1, einen Fan 2, einen Zwischendruckkompressor 3, einen Hochdruckkompressor 4, eine Brennkammer 5 sowie eine Turbinenanordnung, bestehend aus einer Hochdruckturbine 6, einer Zwischendruckturbine 7 und einer Niederdruckturbine 8 auf. Die Hochdruckturbine 6 ist über eine Hochdruckturbinenwelle 9 mit dem Hochdruckkompressor 4 verbunden, während der Zwischendruckkompressor 3 über eine Zwischendruckturbinenwelle 10 an die Zwischendruckturbine 7 angeschlossen ist. Eine Niederdruckturbinenwelle 11 verbindet die Niederdruckturbine 8 mit dem Fan 2 des Triebwerks. Der von der Niederdruckturbine 8 angetriebene Fan 2 beschleunigt die am Lufteinlass 1 eintretende Luft und erzeugt eine äußere, den größten Teil des Vortriebsschubes bewirkende Luftströmung sowie eine innere, zunächst im Zwischendruckkompressor 3 und danach im Hochdruckkompressor 4 verdichtete Luftströmung, die anschließend in die Brennkammer 5 gelangt. Die aus der Brennkammer 5 austretenden Verbrennungsprodukte treiben die Hochdruckturbine 6, die Zwischendruckturbine 7 und die Niederdruckturbine 8 an, bevor sie durch die Düse 12 ausgestoßen werden und einen zusätzlichen Antriebsschub erzeugen.

Die an zwei Stellen in Lagern (nicht dargestellt) abgestützte und in dem vorliegenden Ausführungsbeispiel einen maximalen Außendurchmesser von 100 mm sowie eine Länge von 2 m aufweisende, hoch beanspruchte Niederdruckturbinenwelle 11 besteht aus einem Faserverbundkunststoffrohr 13 mit an dessen einem Ende ausgebildetem, mit einer Rotorscheibe der Niederdruckturbine 8 verbundenen Lasteinleitungsteil 14 und an dessen anderem Ende vorgesehenem, an den Fan 2 angeschlossenen Lastableitungsteil 15. Das Faserverbundkunststoffrohr 13 mit den zugehörigen Lastein- und -ableitungsteilen 14, 15 ist so ausgebildet, das die Niederdruckturbinenwelle 11 über eine hohe Eigenfrequenz und Steifigkeit sowie über schwingungsdämpfende Eigenschaften verfügt und zudem hohe Torsionskräfte aufnehmen und weiterleiten kann und außerdem entsprechend den in diesem Triebwerksbereich herrschenden Temperaturen bis etwa 400 °C temperaturbeständig ist.

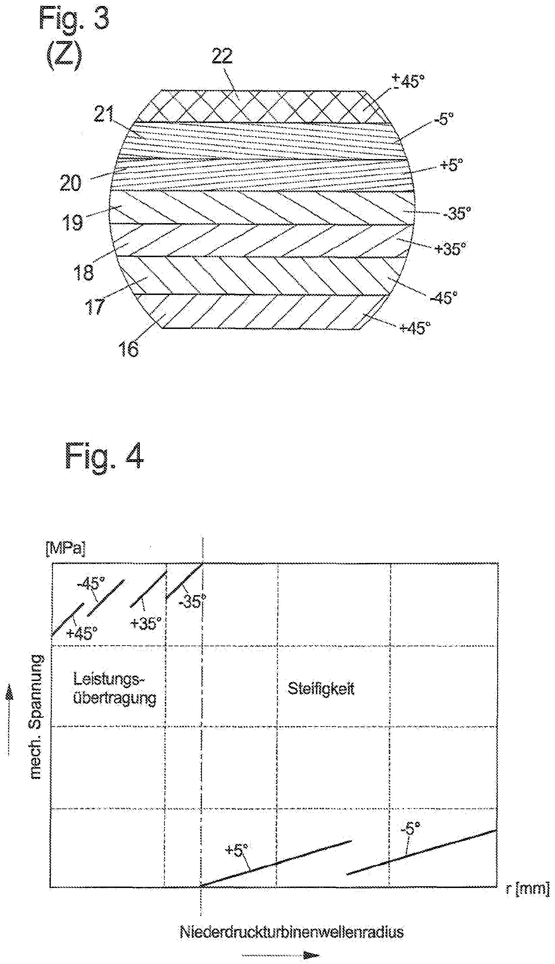

Wie die in Fig. 3 als Einzelheit Z aus Fig. 2 wiedergegebene Schnittansicht der Rohrwand zeigt, weist das Faserverbundkunststoffrohr 13 mehrere, in eine Matrix aus hochtemperaturbeständigem Kunststoff, beispielsweise Zyanitharz und/oder Phenolharz und/oder Polyimide, eingebettete, in unterschiedlicher Richtung orientierte Kohlenstofffaserlagen 16 bis 22 zur Erzeugung eines faserrichtungsabhängigen und entsprechend der Belastung der Niederdruckturbinenwelle entkoppelten Eigenschaftsprofils auf. Das Faserverbundkunststoffrohr 13 umfasst - jeweils eingebunden in das hochtemperaturbeständige Kunstharzsystem - aufeinander folgend von der Innenfläche zur Außenfläche hin eine erste (innere) +45°-Kohlenstofffaserlage 16, eine zweite -45°-Kohlenstofffaserlage 17, eine dritte +35°-Kohlenstofffaserlage 18, eine vierte -35°-Kohlenstofffaserlage 19, eine fünfte +5°-Kohlenstofffaserlage 20, eine sechste -5°-Kohlenstofffaserlage 21 und eine siebte (äußere)+/-45°-Glasfaserlage 22.

Gemäß dem in Fig. 4 gezeigten Diagramm, das den Spannungsverlauf in der Niederdruckturbinenwelle 11 über dem Radius wiedergibt, werden durch die vier ersten, von der Innenfläche ausgehenden, in +45°- und in -45°-Richtung sowie in +35°- und in -35°-Richtung orientierten, in einem hohen Spannungsbereich liegenden Kohlenstofffaserlagen 16 bis 19 Torsionskräfte zur Leistungsübertragung von der Niederdruckturbine 8 auf den Fan 2 aufgenommen, während die beiden sich zur Außenfläche hin anschließenden, in Bezug auf die Längsachse der Niederdruckturbinenwelle 11 in +5°- und in -5°-Richtung orientierten Kohlenstofffaserlagen 20 und 21 für eine hohe Steifigkeit, Eigenfrequenz und Schwingungsdämpfung der Niederdruckturbinenwelle 11 sorgen. Die am Außenumfang der Niederdruckturbinenwelle 11 vorgesehene Glasfaserlage 22 bildet einen Schlauch aus im Winkel von +/-45° verflochtenen, ebenfalls in eine Matrix aus einem Hochtemperaturharzsystem eingebetteten Glasfasern und dient dem äußeren mechanischen Schutz der Niederdruckturbinenwelle 11.

Gemäß der in Fig. 2 teilweise im Schnitt wiedergegebenen Darstellung der Niederdruckturbinenwelle 11 umfasst deren Lasteinleitungsteil 14 einen integral an das Faserverbundkunststoffrohr 13 angeformten, sich allmählich bogenförmig erweiternden Rohrabschnitt 23 mit an dessen Ende ausgebildetem Befestigungsflansch 24, in dem sich Durchgangsbohrungen 25 zu dessen Befestigung an der Rotorscheibe der Niederdruckturbine 8 befinden. Das Lastableitungsteil 15 ist ein mit der Innenfläche des Faserverbundkunststoffrohres 13 fest und unlösbar verbundener metallischer Wellenzapfen, der die von dem Faserverbundkunststoffrohr 13 übertragenen Torsionskräfte zum Fan 2 weiterleitet.

Die Erfindung ist nicht auf die zuvor beispielhaft beschriebene Ausführungsform beschränkt. Beispielsweise ist es denkbar, dass das Lasteinleitungsteil aus einem metallischen, fest mit den die Torsionskräfte aufnehmenden Faserlagen verbundener Antriebszapfen besteht.

### Bezugszeichenliste

- 1: Lufteinlass
- 2: Fan
- 3: Zwischendruckkompressor
- 4: Hochdruckkompressor
- 5: Brennkammer
- 6: Hochdruckturbine
- 7: Zwischendruckturbine
- 8: Niederdruckturbine
- 9: Hochdruckturbinenwelle
- 10: Zwischendruckturbinenwelle
- 11: Niederdruckturbinenwelle
- 12: Düse
- 13: Faserverbundkunststoffrohr
- 14: Lasteinleitungsteil
- 15: Lastableitungsteil
- 16: erste/innere +45°-Kohlenstofffaserlage
- 17: zweite -45°-Kohlenstofffaserlage
- 18: dritte +35°-Kohlenstofffaserlage
- 19: vierte -35°-Kohlenstofffaserlage
- 20: fünfte +5°-Kohlenstofffaserlage
- 21: sechste -5°-Kohlenstofffaserlage
- 22: siebte/äußere +/-45°-Glasfaserlage
- 23: erweiterter Rohrabschnitt von 13
- 24: Befestigungsflansch von 13
- 25: Durchgangsbohrungen

## Patentansprüche

1. Triebwerkswelle für ein Gasturbinentriebwerk, insbesondere Niederdruckturbinenwelle oder Radialwelle, die als Hohlkörper ausgebildet ist und antriebsseitig ein Lasteinleitungsteil (14) und abtriebsseitig ein Lastableitungsteil (15) aufweist, wobei die Triebwerkswelle ein Faserverbundkunststoffrohr (13) umfasst, das Lasteinleitungsteil (14) von einem sich allmählich erweiternden Rohrabschnitt (23) des Faserverbundkunststoffrohres (13) und einem daran angeformten Befestigungsflansch (24) aus Faserverbundkunststoff oder einem unlösbar mit dem die Torsionskräfte aufnehmenden Faserlagen (16 bis 19) verbundenen metallischen Antriebszapfen gebildet ist und das Lastableitungsteil (15) ein mit den Faserlagen (16 bis 19) unlösbar verbundener metallischer Abtriebszapfen ist,
**dadurch gekennzeichnet, dass**
das Faserverbundkunststoffrohr (13) mit im inneren Wandbereich zur Aufnahme und Übertragung von Torsionskräften ausgerichteten Faserlagen (16 bis 19) und im anschließenden äußeren Wandbereich zur Erzielung einer hohen Steifigkeit und Eigenfrequenz ausgerichteten Faserlagen (20, 21) ausgebildet ist, wobei die Faserlagen (20, 21) im äußeren Wandbereich jeweils in einem Winkel von +5° und -5° bis +12° und -12° im Wesentlichen in Längsrichtung der Welle verlaufen und die im inneren Wandbereich liegenden Faserlagen (16 bis 19) jeweils in einem Winkel von +45° und-45° bis +35° und -35° angeordnet sind und stärker quer zur Längsachse der Welle verlaufen.

2. Triebwerkswelle nach Anspruch 1, **dadurch gekennzeichnet, dass** die Faserlagen (20, 21) im äußeren Wandbereich jeweils in einem Winkel von +5° und -5° bis +7° und -7° verlaufen.

3. Triebwerkswelle nach Anspruch 1, **dadurch gekennzeichnet, dass** die Faserlagen (16 bis 19) bei einer als Radialwelle fungierenden Triebwerkswelle als Fasergeflecht gewickelt sind.

4. Triebwerkswelle nach Anspruch 1, **dadurch gekennzeichnet, dass** die Faserlagen aus in eine hochtemperaturbeständige Kunststoffmatrix eingebetteten Kohlenstofffasern bestehen.

5. Triebwerkswelle nach Anspruch 1, **dadurch gekennzeichnet, dass** die Anzahl der zur Übertragung von Torsionskräften und zur Erzielung der erforderlichen Steifigkeit jeweils vorgesehenen Faserlagen entsprechend den jeweils an die Lastübertragung und Steifigkeit gestellten Anforderungen variabel ist.

6. Triebwerkswelle nach Anspruch 1, **dadurch gekennzeichnet, dass** - mit Bezug auf die Längsachse des Faserverbundkunststoffrohres (13) - zur Übertragung von Torsionskräften eine erste, innere Kohlenstofffaserlage (16) in einem Winkel von +45°, eine zweite Kohlenstofffaserlage (17) in einem Winkel von -45°, eine dritte Kohlenstofffaserlage (18) in einem Winkel von +35 und eine vierte Kohlenstofffaserlage (19) in einem Winkel von -35° orientiert ist, und zur Erhöhung der Steifigkeit eine fünfte Kohlenstofffaserlage (20) in einem Winkel von +5° und eine sechste Kohlenstofffaserlage (21) in einem Winkel von -5° ausgerichtet ist.

7. Triebwerkswelle nach Anspruch 6, **dadurch gekennzeichnet, dass** bei der an beiden Wellenenden angetriebenen Radialwelle zur Übertragung der auf diese wirkenden unterschiedlichen Drehmomente die ersten und zweiten Faserlagen (16, 17) sowie die dritten und vierten Faserlagen jeweils ein Fasergeflecht bilden.

8. Triebwerkswelle nach Anspruch 4, **dadurch gekennzeichnet, dass** die Kunststoffmatrix aus Zyanatharzen und/oder Phenolharzen und/oder Polyimiden und/oder Polyetheretherketonen besteht.

9. Triebwerkswelle nach Anspruch 1, **gekennzeichnet durch** ein das Faserverbundkunststoffrohr (13) zusätzlich umhüllendes schlauchartiges Geflecht aus im Winkel von +/-45° ausgerichteten Fasern.

10. Triebwerkswelle nach Anspruch 10, **dadurch gekennzeichnet, dass** das schlauchartige Geflecht eine Glasfaserlage (22) ist.

## Claims

1. Engine shaft for a gas-turbine engine, in particular a low-pressure turbine shaft or a radial shaft, which is designed as hollow body and provided with a load-input element (14) on the driving side and a load-output element (15) on the driven side, where the engine shaft includes a fiber-composite plastic tube (13), where the load-input element (14) is a gradually flaring tube section (23) of the fiber-composite plastic tube (13) and an attachment flange (24) formed on the plastic tube (13) made of fiber-composite plastic material or a metallic driving protrusion inseparably connected to the fiber layers (16 to 19) taking up the torsional forces and the load-output element (15) is a metallic driven protrusion inseparably connected to the fiber layers (16 to 19),
**characterized in that**
the fiber-composite plastic tube (13) is designed with fiber layers (16 to 19) provided in the inner wall area and suitably oriented for taking up and transmitting torsional forces, and with fiber layers (20, 21) in the adjoining outer wall area suitably oriented for providing high stiffness and natural frequency, where the fiber layers (20, 21) provided in the outer wall area each extend at an angle ranging from +5° and -5° to +12° and -12° essentially in the longitudinal direction of the shaft, and the fiber layers (16 to 19) provided in the inner wall area are each disposed at an angle ranging from +45° and -45° to +35° and -35° and are more transversely oriented to the longitudinal axis of the shaft.

2. Engine shaft in accordance with Claim 1, **characterized in that** the fiber layers (20, 21) in the outer wall area are oriented each at an angle ranging from +5° and -5° to +7° and -7°.

3. Engine shaft in accordance with Claim 1, **characterized in that** the fiber layers (16 to 19) are wound as fiber braid in the case of an engine shaft functioning as a radial shaft.

4. Engine shaft in accordance with Claim 1, **characterized in that** the fiber layers include carbon fibers embedded in a high-temperature resistant plastic matrix.

5. Engine shaft in accordance with Claim 1, **characterized in that** the number of fiber layers provided in each case for transmitting torsional forces and achieving the required stiffness is variable depending on the respective requirements placed on load transmission and stiffness.

6. Engine shaft in accordance with Claim 1, **characterized in that** - with reference to the longitudinal axis of the fiber-composite plastic tube (13) - for the transmission of torsional forces a first - inner - carbon fiber layer (16) is oriented at an angle of +45°, a second carbon fiber layer (17) at an angle of -45°, a third carbon fiber layer (18) at an angle of +35° and a fourth carbon fiber layer (19) at an angle of -35°, and, for increasing the stiffness, a fifth carbon fiber layer (20) is oriented at an angle of +5°and a sixth carbon fiber layer (21) at an angle of -5°.

7. Engine shaft in accordance with Claim 6, **characterized in that,** in the case of the radial shaft driven at both shaft ends, for the transmission of the different torques applied to the latter, the first and second fiber layers (16, 17) as well as the third and fourth fiber layers form a fiber braid each.

8. Engine shaft in accordance with Claim 4, **characterized in that** the plastic matrix is made of cyanate resins and/ or phenolic resins and/ or polyimides and/ or polyetherether-ketones.

9. Engine shaft in accordance with Claim 1, **characterized by** a hose-type braid of fibers oriented at an angle of +/-45°, which additionally envelops the fiber-composite plastic tube (13).

10. Engine shaft in accordance with Claim 1, **characterized in that** the hose-type braid is a glass fiber layer (22).

## Revendications

1. Arbre de moteur pour un moteur à turbine à gaz, en particulier arbre de turbine basse pression ou arbre radial, lequel est conçu en tant que corps creux et présente côté menant une pièce d'introduction de charge (14) et côté mené une pièce d'évacuation de charge (15), sachant que l'arbre de moteur comprend un tube en matière plastique renforcée par des fibres (13), que la pièce d'introduction de charge (14) est formée par une section (23) s'évasant graduellement du tube en matière plastique renforcée par des fibres (13) et par une bride de fixation (24) en matière plastique renforcée par des fibres formée dans ladite section, ou par un tourillon menant métallique lié de manière indissociable aux couches de fibres (16 à 19) absorbant les forces de torsion, et que la pièce d'évacuation de charge (15) est un tourillon mené métallique lié de manière indissociable aux couches de fibres (16 à 19),
**caractérisé en ce que**
le tube en matière plastique renforcée par des fibres (13) est formé avec des couches de fibres (16 à 19) orientées dans la zone de paroi intérieure pour absorber et transmettre des forces de torsion et avec des couches de fibres (20, 21) orientées dans la zone de paroi extérieure adjacente pour obtenir une rigidité et une fréquence propre élevées, sachant que les couches de fibres (20, 21) dans la zone de paroi extérieure s'étendent sensiblement dans le sens longitudinal de l'arbre selon respectivement des angles de +5° et -5° à +12° et -12°, et que les couches de fibres (16 à 19) situées dans la zone de paroi intérieure sont disposées selon respectivement des angles de +45° et - 45° à +35° et -35° et s'étendent plus fortement obliquement par rapport à l'axe longitudinal de l'arbre.

2. Arbre de moteur selon la revendication n° 1, **caractérisé en ce que** les couches de fibres (20, 21) dans la zone de paroi extérieure s'étendent selon respectivement des angles de +5° et -5° à +7° et -7°.

3. Arbre de moteur selon la revendication n° 1, **caractérisé en ce qu**'en présence d'un arbre de moteur faisant office d'arbre radial, les couches de fibres (16 à 19) sont enroulées sous forme de tresse de fibres.

4. Arbre de moteur selon la revendication n° 1, **caractérisé en ce que** les couches de fibres sont constituées de fibres de carbone insérées dans une matrice de matière plastique à haute résistance thermique.

5. Arbre de moteur selon la revendication n° 1, **caractérisé en ce que** le nombre de couches de fibres respectivement prévues pour transmettre des forces de torsion et pour obtenir la rigidité requise est variable en fonction des exigences posées respectivement à la transmission de charge et à la rigidité.

6. Arbre de moteur selon la revendication n° 1, **caractérisé en ce que** - par rapport à l'axe longitudinal du tube en matière plastique renforcée par des fibres (13) - pour transmettre des forces de torsion, une première couche de fibres de carbone (16) intérieure est orientée selon un angle de +45°, une deuxième couche de fibres de carbone (17) selon un angle de -45°, une troisième couche de fibres de carbone (18) selon un angle de +35° et une quatrième couche de fibres de carbone (19) selon un angle de -35°, et que pour augmenter la rigidité, une cinquième couche de fibres de carbone (20) est orientée selon un angle de +5° et une sixième couche de fibres de carbone (21) selon un angle de -5°.

7. Arbre de moteur selon la revendication n° 6, **caractérisé en ce qu**'avec l'arbre radial mené à ses deux extrémités pour transmettre les différents couples de rotation agissant sur lui, la première et la deuxième couches de fibres (16, 17) ainsi que la troisième et la quatrième couches de fibres forment respectivement une tresse de fibres.

8. Arbre de moteur selon la revendication n° 4, **caractérisé en ce que** la matrice de matière plastique est constituée de résines cyanates et/ ou de résines phénoliques et/ ou de polyimides et/ ou de polyétheréthercétones.

9. Arbre de moteur selon la revendication n° 1, **caractérisé par** une tresse en forme de tuyau constituée de fibres orientées selon un angle de +/- 45° entourant de plus le tube en matière plastique renforcée par des fibres (13).

10. Arbre de moteur selon la revendication n° 1, **caractérisé en ce que** la tresse en forme de tuyau est une couche de fibres de verre (22).
